# EUROPEAN PATENT APPLICATION

(11) **EP 1 909 026 A1**
(43) Date of publication of application: **09.04.2008**
(21) Application number: 06767267.5
(22) Date of filing: 23.06.2006
(51) Int. Cl.: F21V 8/00, F21S 2/00, F21V 19/00, G02F 1/13357, F21Y 101/02

(54) **LINEAR LIGHT SOURCE DEVICE, PLANAR LIGHT EMITTING DEVICE AND LIQUID CRYSTAL DISPLAY DEVICE**

(30) Priority: 04.07.2005 JP 2005194593; 15.07.2005 JP 2005206448
(71) Applicant: Matsushita Electric Industrial Co., Ltd., Kadoma-shi Osaka 571-8501 (JP)
(72) Inventor: CHOSA, Yoshihiko c/o Matsushita Electrical Ind. Co., Ltd., 2-1-61, Shiromi, Chuo-ku Osaka 540-6207 (JP); UCHIDA, Hiroshi c/o Matsushita Electrical Ind. Co., Ltd., 2-1-61, Shiromi, Chuo-ku Osaka 540-6207 (JP); FUKUDOME, Tetsuya c/o Matsushita Electrical Ind. Co., Ltd., 2-1-61, Shiromi, Chuo-ku Osaka 540-6207 (JP); KAWAHARA, Hisakazu c/o Matsushita Electrical Ind. Co., Ltd., 2-1-61, Shiromi, Chuo-ku Osaka 540-6207 (JP); HORIUCHI, Toshiro c/o Matsushita Electrical Ind. Co., Ltd., 2-1-61, Shiromi, Chuo-ku Osaka 540-6207 (JP); HASEGAWA, Yu c/o Matsushita Electrical Ind. Co., Ltd., 2-1-61, Shiromi, Chuo-ku Osaka 540-6207 (JP); HIDAKA, Kouji c/o Matsushita Electrical Ind. Co., Ltd., 2-1-61, Shiromi, Chuo-ku Osaka 540-6207 (JP); YAMAGUCHI, Hiroshi c/o Matsushita Electrical Ind. Co., Ltd., 2-1-61, Shiromi, Chuo-ku Osaka 540-6207 (JP)
(74) Representative: Grünecker, Kinkeldey, Stockmair & Schwanhäusser Anwaltssozietät
(86) International application number: PCT/JP2006/312650
(87) International publication number: WO 2007/004450

(57) **Abstract**

To provide a linear light source device (1) arranged on a lateral surface of a light guide plate, comprising: a plurality of linear light source assemblies (3) each including an elongated substrate and a plurality of light emitting elements linearly mounted on one of main surfaces of the sub substrate; and a main substrate (2) having mounted thereon the linear light source assemblies (3). With this structure, even if the linear light source device (1) is elongated, luminance unevenness is hardly caused in planar light emitting devices and liquid crystal display devices.

## Description

### TECHNICAL FIELD

The present invention relates to a linear light source device available for a planar light emitting device or the like of a liquid crystal display device of mobile phones and digital cameras for example, and to a planar light emitting device and a liquid crystal display device that include the linear light source device.

### BACKGROUND ART

Conventionally, linear light source devices and planar light emitting devices that include light emitting elements such as LEDs (Light Emitting Diodes) as light sources have been used.
For example, Patent Document 1 discloses a planar light emitting device that includes a plurality of chip LEDs arranged on a lateral surface of a light guide plate. Each of the chip LEDs includes one light emitting element therein, and is independently mounted on one printed substrate.

Also, Patent Document 2 discloses a planar light emitting device that includes one linear light source device arranged on a lateral surface of a light guide plate. This linear light source device is composed of a plurality of light emitting elements that are mounted on one elongated substrate and are modularized by sealing with resin.
Patent Document 1: Japanese Patent Application Publication No. 2001-67917
Patent Document 2: Japanese Patent Application Publication No. 2004-235139

### DISCLOSURE OF THE INVENTION

### PROBLEMS THE INVENTION IS GOING TO SOLVE

Recently, liquid crystal display devices have become general-purpose, and the screen size thereof has been increasing. For example, although the screen size of liquid crystal display devices used for mobile phone devices ranges from only 2 to 3 inches (5.08 to 7.62 cm), the screen size of liquid crystal display devices used for car navigation devices ranges from 6 to 8 inches (15.24 to 20.32 cm). Furthermore, the screen size of liquid crystal display devices used for personal computers ranges from 14 to 20 inches (35.56 to 50.8 cm), and the screen size greater than 20 inches are also used for personal computers. With such an increase of the screen size, linear light source devices need to be elongated, and the size of planar light emitting devices needs to be increased. Also, the number of light emitting elements as light sources needs to be increased in order to maintain the luminance.

However, according to the structure disclosed in Patent Document 1, the increase in the number of the chip LEDs makes it difficult to cause light to uniformly enter into the light guide plate. As a result, the luminance unevenness is caused in the planar light emitting device. This is because of the following reason. In order to cause light to uniformly enter into the light guide plate, the chip LEDs need to be arranged by aligning positions and orientations thereof such that the linearity to the light guide plate is maintained. If the number of the chip LEDs is large, it is difficult to align the positions and the orientations of all the chip LEDs when printing a solder paste on a substrate to arrange the chip LEDs or when performing soldering in reflow processing. For example, if one of the chip LEDs is misaligned to the side of the light guide plate, only a point where the misalignment occurs is brighter than other points. This is luminance unevenness. The increase in the number of the chip LEDs heightens the possibility of occurrence of such a misalignment.

Likewise, the above problem also occurs in the structure disclosed in Patent Document 2 in which all the light emitting elements are mounted on one substrate and are modularized. Furthermore, according to the structure disclosed in Patent Document 2, the modularization is performed by combining the substrate and the resin whose expansion coefficients are different from each other. Accordingly, if the linear light source device is elongated, the linear light source device might be distorted caused by heat generated by the light emitting elements due to the difference in expansion coefficient, for example. If the linear light source device is distorted as described above, distances between each of the light emitting elements and the light guide plate are not uniform, and it is difficult to cause light to uniformly enter into the light guide plate. This causes the luminance unevenness.

In view of the above problem, the present invention mainly aims to provide a linear light source device that hardly causes the luminance unevenness even if the linear light source device is elongated in accordance with the increase in screen size of liquid crystal display devices. The present invention also aims to provide a planar light emitting device and a liquid crystal display device with reduced luminance unevenness including such a linear light source device.

### MEANS TO SOLVE THE PROBLEMS

In order to solve the above problem, the linear light source device according to the present invention is a linear light source device arranged on a lateral surface that is a light incident surface of a light guide plate, the linear light source device comprising: a plurality of linear light source assemblies each including an elongated sub substrate and a plurality of light emitting elements linearly mounted on one of main surfaces of the sub substrate; and a main substrate having mounted thereon the linear light source assemblies.

### EFFECT OF THE INVENTION

With the above structure, even if the linear light source device is elongated, positions and orientations of the light emitting elements are easily aligned by shortening each of the linear light source assemblies. In other words, it is unnecessary to align the positions and the orientations of all the light emitting elements at a time, unlike the structures disclosed in Patent Document 1 and Patent Document 2. It is possible to easily align the positions and the orientations of all the light emitting elements by aligning the positions and the orientations of the light emitting elements for each of the linear light source assemblies individually, and then aligning positions and orientations of the linear light source assemblies. Furthermore, since the linear light source assemblies are hardly distorted due to the shortening thereof, it is easy to maintain to uniform the distances between each of the light emitting elements and the light guide plate. Accordingly, it is possible to cause light to uniformly enter into the light guide plate, and the luminance unevenness is hardly caused.

Also, in the linear light source device according to the present invention, the linear light source assemblies each including a sub substrate having mounted thereon a plurality of light emitting elements are further mounted on the main substrate. Therefore, heat generated by the light emitting elements is conducted to the sub substrate, and the heat is dissipated from a face of the sub substrate to the surroundings. Also, the heat is conducted to the main substrate, and the heat is dissipated from a face of the main substrate to the surroundings. Therefore, high heat dissipation effect is achieved and the temperature of the light emitting elements hardly becomes high, compared with the structures disclosed in Patent Document 1 and Patent Document 2 in which all the light emitting elements are mounted on one substrate. Therefore, the light emitting elements are longer lasting, and the linear light source device is also longer lasting. Furthermore, since the high heat dissipation effect is achieved, the light emitting elements hardly generate high heat even if large currents are supplied to the light emitting elements. This makes it possible to supply large currents to the light emitting elements so as to cause the planar light emitting device to have high luminance.

Furthermore, the linear light source device according to the present invention includes the linear light source assemblies that are hardly distorted as described above. Therefore, no large gaps are generated between each of the linear light source assemblies and the main substrate. As a result, heat conducted to the sub substrate is easily conducted to the main substrate, and this improves the heat dissipation effect.
Furthermore, if the number of the light emitting elements increases, the following problems occur. The size of the substrate increases because of the size increase in a wiring gap caused by the complicated wiring, time and effort for mounting the light emitting elements increase, and connection defects easily occur in accordance with the increase in the number of connections. However, in the linear light source device according to the present invention, a primary wiring of the light emitting elements is completed for each of the linear light source assemblies, and therefore the wiring of the main substrate having mounted thereon the linear light source assemblies can be simplified. Therefore, the size of the main substrate can be reduced. Time and effort for mounting the light emitting elements can be reduced. Furthermore, the connection defects hardly occur.

The linear light source assemblies may be substantially linearly arranged such that longitudinal directions of the sub substrates are the same.
With this structure, the linearity to the light guide plate has only to be maintained for each of the linear light source assemblies, and the linearity to the light guide plate does not have to be maintained for each of the light emitting elements. Accordingly, positions and orientations of the light emitting elements can be easily aligned when printing a solder paste on a predetermined position of the main substrate to arrange the linear light source assemblies or when performing soldering in reflow processing. As a result, the linearity of the light emitting elements to the light guide plate can be maintained.

Also, each of the sub substrates may be connected with the main substrate via a power terminal and a heat conductive terminal.
With this structure, heat conducted to the sub substrate is conducted to the main substrate, not only via the power terminal or via dissipation through the gaps generated between each of the sub substrates and the main substrate, but also via the heat conductive terminal. Accordingly, the high heat dissipation effect is achieved.

By the way, in the reflow processing for mounting the linear light source assemblies on the main substrate, if a position of one of the linear light source assemblies is misaligned and as a result one end thereof becomes closer to the light guide plate and the other end becomes farer from the light guide plate, the luminance in a position of the linear light source assembly closer to the light guide plate is higher, and the luminance in a position of the linear light source assembly farer from the light guide plate is lower. This makes it impossible to cause light to uniformly enter into the light guide plate. If the sub substrate is connected with the main substrate only via the power terminal, such misalignment of the linear light source assembly is easily caused. In the linear light source device according to the present invention, the sub substrate is connected with the main substrate not only via the power terminal but also via the heat conductive terminal. Therefore, since the misalignment is hardly caused, the luminance unevenness is hardly caused.

Also, the heat conductive terminal may be provided on another one of the main surfaces of the sub substrate so as to correspond to a position where the light emitting elements are mounted.
With this structure, the heat generated by the light emitting elements can be conducted to the main substrate from a position of the sub substrate close to the light emitting elements. Therefore, the high heat conductive effect is achieved, and as a result, the high heat dissipation effect is achieved.
Also, the heat conductive terminal may be connected with a wiring pattern having conductively mounted thereon the light emitting elements via a through hole formed in the sub substrate.

With this structure, the heat generated by the light emitting elements is conducted from the conductively mounted wiring pattern to the heat conductive terminal via the through hole, and then the heat is further conducted to the main substrate. Therefore, the high heat dissipation effect is achieved.
Also, the through hole may be filled with resin.
With this structure, it is possible to make the through hole solid. Accordingly, the heat can be conducted not only via the through hole but also via the resin. Also, by using a high heat conductive resin, it is possible to further improve the heat dissipation effect.

Also, the sub substrate may be a ceramic substrate, and the main substrate may include an aluminum plate having attached thereto an insulating substrate having formed thereon a wiring pattern.
With this structure, the heat dissipation effect can be further improved.
Also, each of the linear light source assemblies may include a reflecting member that reflects light output from the light emitting elements in a light take-out direction.

With this structure, light output from the light emitting elements in the lateral direction can be reflected in the light take-out direction. Therefore, the luminance of the planar light emitting device can be improved. Note that the reflecting members may be arranged alternately with the light emitting elements, and the number of the light emitting elements provided between each adjacent two of the reflecting members can be determined appropriately in accordance with the necessary luminance.
Also, an integral multiple of a length of each of the sub substrates in a longitudinal direction may be substantially equal to a length of the lateral surface of the light guide plate.

With this structure, there is no need to prepare linear light source devices having various lengths in accordance with the screen size of liquid crystal display devices. For example, screens of liquid crystal display devices used for car navigation devices and personal computers are graduated in size with a constant size difference. In accordance with the screen size, light guide plates are also graduated in size. If an integral multiple of a length of the linear light source assembly is substantially equal to a length of a lateral surface of a light guide plate, a linear light source device having a length appropriate for the light guide plate can be obtained by only arranging a necessary number of the linear light source assemblies linearly. Furthermore, by simply preparing the linear light source assemblies having a uniform length equal to the size difference, the linear light source device can be used for various screen sizes. That is, the linear light source device can be used for various screen sizes by increasing the linear light source assemblies by one piece for each time screen size increases by one grade.

The planar light emitting device and the liquid crystal display device according to the present invention include the above linear light source device, and therefore luminance unevenness is difficult to be caused.

### BRIEF DESCRIPTION OF THE DRAWINGS

FIG. 1 is a perspective view and a partial enlarged view showing a linear light source device according to an embodiment;
FIG. 2 is a perspective view showing a linear light source assembly of the linear light source device according to the embodiment;
FIG. 3 shows the relation between screen sizes of a liquid crystal display device including the linear light source device according to the embodiment used as a light source of a planar light emitting device and lengths of a sub substrate of the linear light source assembly;
FIG. 4 is a partial enlarged sectional view showing a connection part between the linear light source assembly and a main substrate of the linear light source device according to the embodiment;
FIG. 5 shows an outline structure of the planar light emitting device including the linear light source device according to the embodiment, where FIG. 5A is a side view thereof and FIG. 5B is a front view thereof;
FIG. 6 is a sectional view showing the linear light source device according to the embodiment arranged on a lateral surface of a light guide plate;
FIG. 7 is a sectional view showing an outline structure of a liquid crystal display device including the linear light source device according to the embodiment;
FIG. 8 shows a manufacturing method of the linear light source device according to the embodiment;
FIG. 9 shows the manufacturing method of the linear light source device according to the embodiment;
FIG. 10 shows the manufacturing method of the linear light source device according to the embodiment;
FIG. 11 shows the manufacturing method of the linear light source device according to the embodiment;
FIG. 12 shows the manufacturing method of the linear light source device according to the embodiment; and
FIG. 13 is a partial enlarged sectional view showing a connection part between a linear light source assembly and a main substrate of a linear light source device according to a modification of the embodiment.

### DESCRIPTION OF CHARACTERS

- 1:: linear light source device
- 2:: main substrate
- 2a:: widened portion
- 2b:: connection terminal
- 3:: linear light source assembly
- 3a:: sub substrate
- 3a-1:: mounting surface
- 3a-2:: connection surface
- 3b:: light emitting element
- 3c:: reflecting member
- 3c-1:: inclined surface
- 3d:: resin sealing member
- 3e:: power terminal
- 3g:: mounting base
- 3f:: heat conductive terminal (alignment terminal)
- 4:: circuit
- 5:: light guide plate
- 5a:: lateral surface
- 5b:: main light outputting surface
- 5c:: reflecting surface
- 6:: reflecting plate
- 7a:: upper reflecting sheet
- 7b:: lower reflecting sheet
- 10:: substrate material
- 11:: frame
- 11a:: opening
- 12:: resin sealing layer
- 15:: linear light source device
- 16:: heat conductive terminal (alignment terminal)
- 17:: wiring pattern
- 18:: through hole
- 19:: resin
- 20:: planer light emitting device
- 21:: liquid crystal display device
- 22:: liquid crystal display unit
- F:: main light take-out direction

### BEST MODE FOR CARRYING OUT THE INVENTION

### (Embodiment)

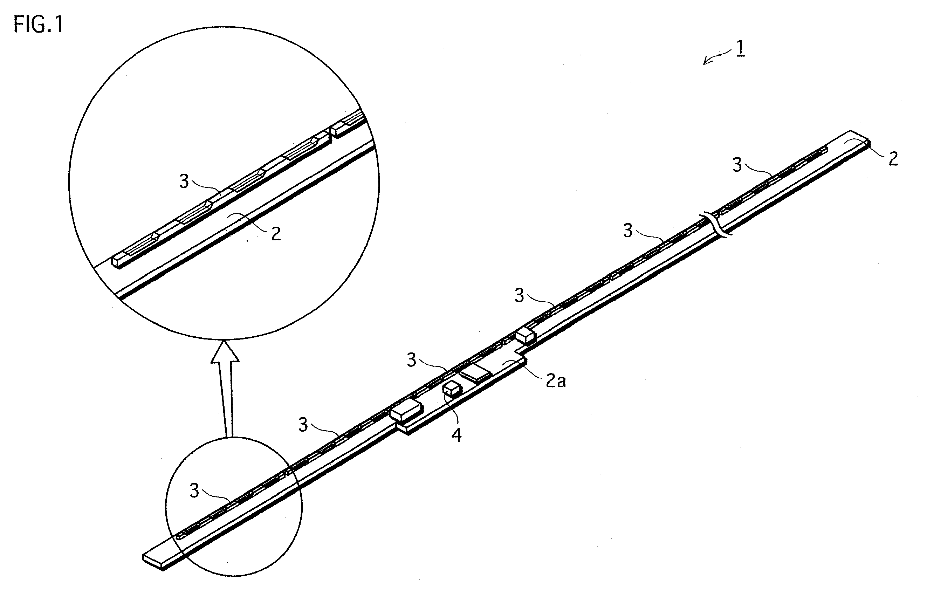

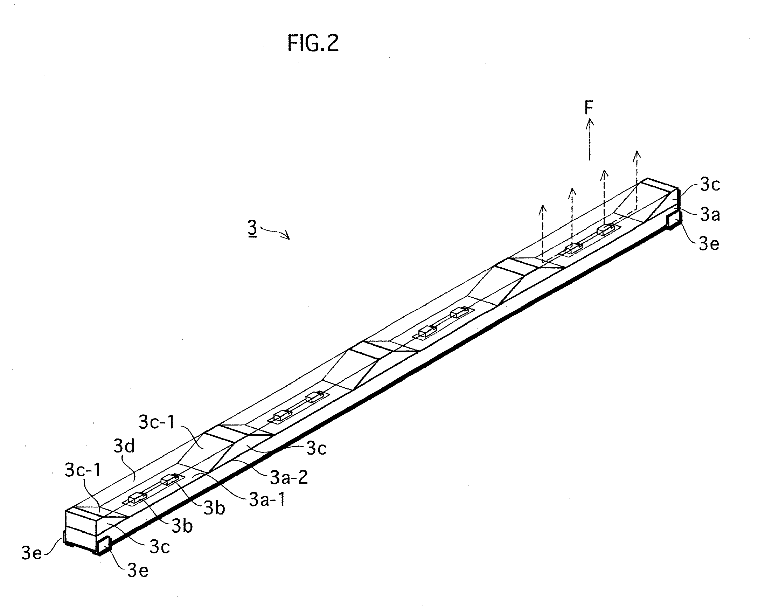

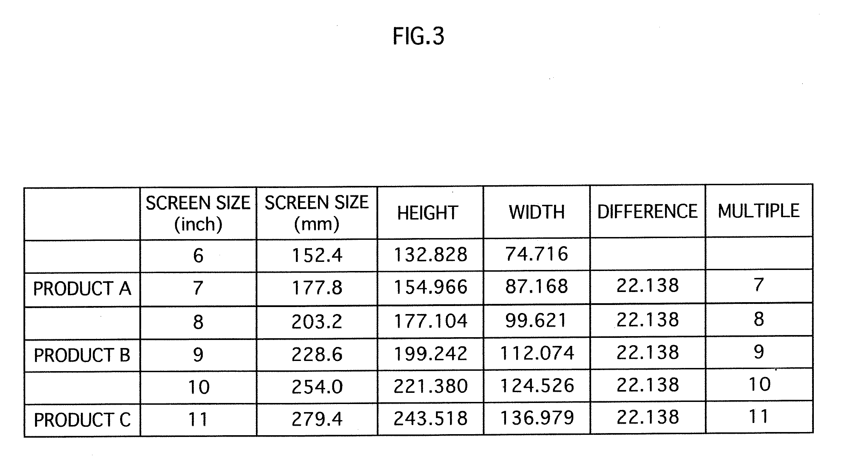

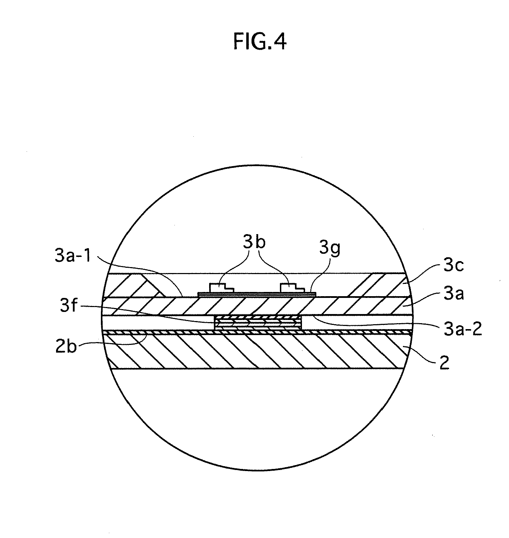

The following describes a structure of a linear light source device according to an embodiment of the present invention, with reference to FIG. 1 to FIG. 4. FIG. 1 is a perspective view and a partial enlarged view showing a linear light source device according to the embodiment. FIG. 2 is a perspective view showing a linear light source assembly of the linear light source device according to the embodiment. FIG. 3 shows the relation between screen sizes of a liquid crystal display device including the linear light source device according to the embodiment used as a light source of a planar light emitting device and lengths of a sub substrate of the linear light source assembly. FIG. 4 is a partial enlarged sectional view showing a connection part between the linear light source assembly and a main substrate of the linear light source device according to the embodiment.

As shown in FIG. 1, a linear light source device 1 includes an elongated main substrate 2 having mounted thereon 11 linear light source assemblies 3. The linear light source device 1 is used as a light source of planar light emitting devices of 11-inch (27.9-cm) liquid crystal display devices, and is mounted on B5-size notebook personal computers.
Each of the linear light source assemblies 3 mounted on the main substrate 2 is arranged substantially linearly such that longitudinal directions of elongated sub substrates 3a are the same. There is a gap of approximately 0.15 mm between each adjacent two of the linear light source assemblies 3.

The main substrate 2 has a length of approximately 25 cm and a width at both ends of approximately 6.0 mm, and is formed by attaching a glass epoxy substrate, which is an insulating substrate having formed thereon a wiring pattern, to an aluminum plate base. The main substrate 2 has mounted thereon a circuit 4, which controls currents flowing through the linear light source assemblies 3 and is provided on a widened portion 2a having a partially widened width.
As shown in FIG. 2, each of the linear light source assemblies 3 includes the sub substrate 3a, eight light emitting elements 3b as light sources that are mounted on the sub substrate 3a, reflecting members 3c, and a resin sealing member 3d that seals the light emitting elements 3b. Between each adjacent two of the reflecting members 3c, two light emitting elements 3b are provided. Note that although single linear light source assembly 3 is composed of eight light emitting elements 3b here, the linear light source device of the present invention is not limited to this number of the eight light emitting elements 3b. Single linear light source assembly 3 may be composed of any number of the light emitting elements 3b.

The sub substrate 3a is a ceramic substrate having a length of approximately 22 mm and a width of approximately 0.8 mm. The sub substrate 3a is adjusted to have a length whose integral multiple is substantially equal to a length of one of lateral surfaces of a light guide plate.
The following describes, with reference to FIG. 3, the relation between screen sizes of a liquid crystal display device including the linear light source device 1 used as a light source of a planar light emitting device and lengths of the sub substrate 3a of the linear light source assembly 3.

As shown in FIG. 3, generally, liquid crystal display devices of notebook personal computers have screens that are graduated in size from 7 to 11 inches. For example, the screen size includes 7 inches (a Product A), 9 inches (a Product B), and 11 inches (a Product C). Also, such screens have an aspect ratio of 16:9, which is a landscape aspect ratio referred to as a "wide aspect ratio".
For example, the Product A has a screen size of 7 inches, which represents a length of a diagonal line of a screen. The Product A has an aspect ratio of 16: 9, and therefore has a width of approximately 154.966 mm and a height of approximately 87.168 mm. A liquid crystal display device having a screen size of 8 inches has a width of approximately 177.104 mm and a height of approximately 99.621 mm. Accordingly, the difference in width between the 7-inch Product A and the 8-inch product is approximately 22.138 mm. Likewise, a difference in width between the 8-inch Product and the 9-inch Product B, a difference in width between the 9-inch Product B and a 10-inch product, and the difference in width between the 10-inch product and the 11-inch Product C are approximately 22.138 mm. If this length of approximately 22.138 mm is set as a length in the longitudinal direction of the sub substrate 3a, that is, a length in the longitudinal direction of the linear light source assembly 3, a light guide plate of a 7-inch liquid crystal display device having mounted thereon seven linear light source assemblies 3 can be used for the Product A, and a light guide plate of a 9-inch liquid crystal display device having mounted thereon nine linear light source assemblies 3 can be used for the Product B. If the linear light source assemblies 3 having a uniform length are prepared as described above, it is possible to use the linear light source assemblies 3 having a uniform length for liquid crystal display devices with various screen sizes by adding one linear light source assembly 3 as a screen size of liquid crystal display devices increases by one size.

When the linear light source assemblies 3 each having the sub substrate 3a whose length is determined as described above are arranged on the main substrate 2, a slight gap needs to be provided between each of the adjacent linear light source assemblies 3 depending on the accuracy of a mounter that mounts the linear light source assemblies 3 on the main substrate 2. Therefore, if the sub substrates 3a are uniformed to have a length of approximately 22.138 mm, the entire length of the linear light source device 1 is longer than a width of the liquid crystal display device because of gaps provided between each of the adj acent linear light source assemblies 3. However, even if the number of the gaps that is the same as the number of the linear light source assemblies 3 are provided, the gaps are minute compared with the entire length of the linear light source device 1 in which the linear light source assemblies 3 are linearly arranged. Therefore, the gaps do not have influence on the determination of the length of the sub substrate 3a of the linear light source assembly 3. Also, if the standard length of the linear light source assembly 3 is set as approximately 22.138 mm as described above, the sub substrate 3a may have a length of approximately 22 mm and each gap may have a length of approximately 0.138 mm, such that the total length of the sub substrate 3a and the gaps is approximately 22.138 mm.

Returning to FIG. 2, in the sub substrate 3a, the light emitting elements 3b are mounted on a mounting surface 3a-1 by die-bonding, and a wiring pattern conductively connected with a cathode and a wiring pattern conductively connected with an anode on the light emitting element 3b via a wire are provided.
Eight light emitting elements 3b included in each of the linear light source assemblies 3 are connected in series within the linear light source assembly 3, and the constant current control is performed using driver systems which are separately provided for each of the linear light source assemblies 3. The circuit 4 of the main substrate 2 includes a drive circuit using a general-purpose multichannel constant current driver IC for performing the constant current control.

The light emitting elements 3b are arranged in serial eight by eight. This is because of the following reasons. Parallel drive of the light emitting elements 3b causes great variations in currents flowing through the light emitting elements 3b even due to slight variations in properties, and it is difficult for the light emitting elements 3b to uniformly emit light. However, the present invention is not limited to this structure. Alternatively, parallel drive of the light emitting elements 3b may be performed by individually selecting each of the light emitting elements 3b, for example, to uniform properties.
By defining one linear light source assembly 3 as one system as described above, the wiring pattern of the main substrate 2 can be simplified, and therefore the width of the main substrate 2 can be reduced. As a result, a whole size of the linear light source device 1 can be reduced.

However, the present invention is not limited to this definition of one linear light source assembly 3 as one system. Alternatively, 88 light emitting elements 3b included in 11 linear light source assemblies 3 may be connected in series and defined as one system. If this is the case, although a high drive voltage is necessary, the number of connections can be further reduced.
However, if the number of the light emitting elements 3b to be mounted on one linear light source assembly 3 is too small, it is difficult to exhibit an effect due to the modularization. On the other hand, the number of the light emitting elements 3b to be mounted on one linear light source assembly 3 is too large, occurrence of defects in any one of the light emitting elements 3b makes it impossible to use the entire linear light source assembly 3, and this decreases the manufacturing yield. Accordingly, the number of the light emitting elements 3b to be mounted on one linear light source assembly 3 is preferably not more than 20.

The circuit 4 is formed on the main substrate 2. Due to this, connection with outside is performed via only a power line for activating circuits and a control signal line for adjusting the luminance, and the line connection is simplified. However, the present invention is not limited to this structure. Alternatively, only the linear light source assemblies 3 may be mounted on the main substrate 2, and the circuit 4 may be structured outside. If this is the case, although the number of connections with outside increases, the size of the main substrate 2 can be further reduced.

In the sub substrate 3a, the power terminals 3e, which are connection terminals for connection with the main substrate 2, are provided at the both ends of the connection surface 3a-2, which is opposite to the mounting surface 3a-1. The power terminals 3e are connected with the power pattern that is one of the wiring patterns formed on the main substrate 2. This connection supplies a voltage for causing the light emitting elements 3b to emit light.
As shown in FIG. 4, in the sub substrate 3a, one heat conductive terminal (alignment terminal) 3f is provided on the connection surface 3a-2 of the sub substrate 3a so as to correspond to a position where two light emitting elements 3b are mounted. The connection terminal 2b that is one of the wiring patterns connecting with the heat conductive terminal 3f is provided on the main substrate 2. The heat conductive terminal 3f provided on the sub substrate 3a and the connection terminal 2b provided on the main substrate 2 are not connected with other wiring patterns.

The light emitting elements 3b are mounted on the mounting base 3g of the wiring pattern formed on the mounting surface 3a-1 of the sub substrate 3a. The mounting base 3g made of Ag having high reflectivity reflects light output from the light emitting elements 3b toward the sub substrate 3a. Therefore, the luminance efficiency can be improved.
Returning to FIG. 2, light emitting elements that output white light using a GaN compound semiconductor can be used for the light emitting elements 3b. In the embodiment, between each adjacent two of the reflecting members 3c, two light emitting elements 3b are provided.

Each of the reflecting members 3c of the linear light source assembly 3 is made of PPA (polyphthalamide) resin, and includes an inclined surface 3c-1 that is formed such that light output from the light emitting element 3b in the longitudinal direction is reflected in a main light take-out direction F of the linear light source assembly 3.
Note that the present invention is not limited to the structure where one reflecting member 3c is provided for each two light emitting elements 3b. Alternatively, the reflecting member 3c may be provided for each any arbitrary number of the light emitting elements 3b, for example, for each light emitting element 3b, for each three light emitting elements 3b, etc. Also, there may be a case where the reflecting members 3c are not provided.

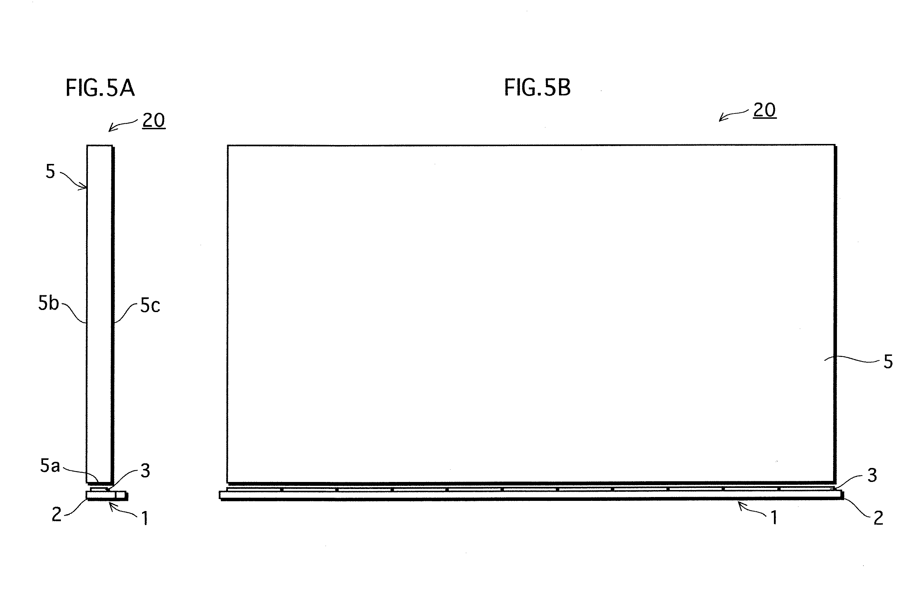

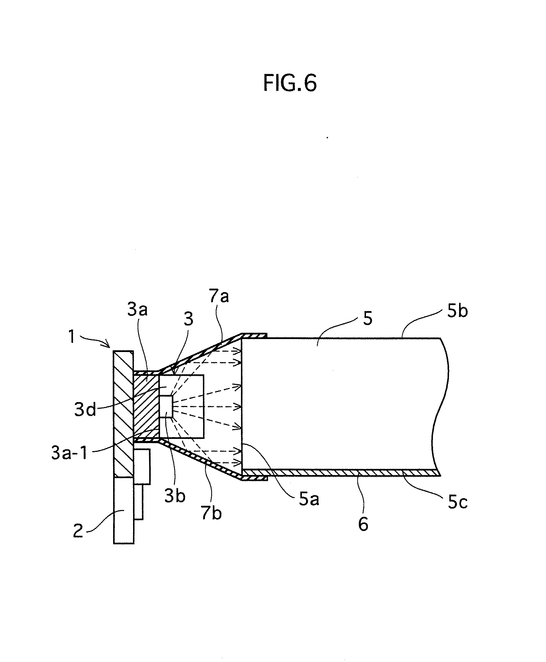

The resin sealing member 3d includes the sub substrate 3a as a bottom surface, and epoxy resin fills depressions of the resin sealing member 3d whose wall surfaces are the reflecting members 3c that are positioned at both ends thereof so as to seal the light emitting elements 3b.
Next, the following describes a structure of a planar light emitting device including the linear light source device 1 arranged on a light guide plate, with reference to FIG. 5 and FIG. 6. FIG. 5 shows an outline structure of a planar light emitting device including the linear light source device according to the embodiment, where FIG. 5A is a side view thereof and FIG. 5B is a front view thereof. FIG. 6 is a sectional view of the linear light source device according to the embodiment arranged on the lateral surface of the light guide plate.

As shown in FIG. 5, a planar light emitting device 20 includes the linear light source device 1 and the light guide plate 5. The light guide plate 5 is a rectangle plate made of acrylic or polycarbonate, and has a width of approximately 24.5 cm, a height of approximately 14.0 cm, and a thickness of approximately 2 mm. The light guide plate 5 receives incident light by a light incident surface thereof, reflects the light to cause the light to travel inside the light guide plate 5, and outputs the light from a top surface thereof as a main light outputting surface 5b.
As shown in FIG. 6, in the planar light emitting device 20, the mounting surface 3a-1 of the sub substrate 3a having mounted thereon the light emitting element 3b is arranged opposite to a lateral surface 5a, which is the light incident surface of the light guide plate 5. Also, the lateral surface 5a that is the light incident surface of the light guide plate 5 is formed to have a width of 2 mm, which is a width wider than a width of the mounting surface 3a-1. A reflecting plate 6 is arranged on the light guide plate 5 so as to face the reflecting surface 5c, which is in an opposite side to the main light outputting surface 5b.

The linear light source device 1 and the light guide plate 5 are arranged such that the center in the width direction of the sub substrate 3a of the linear light source assembly 3 coincides with the center in the width direction of the lateral surface 5a of the light guide plate 5.
An upper reflecting sheet 7a and a lower reflecting sheet 7b each having a strip shape are arranged so as to hold the sub substrate 3a of the linear light source assembly 3 and the lateral surface 5a that is the light incident surface of the light guide plate 5, and to gradually widen a gap between the upper reflecting sheet 7a and the lower reflecting sheet 7b toward the light incident surface.

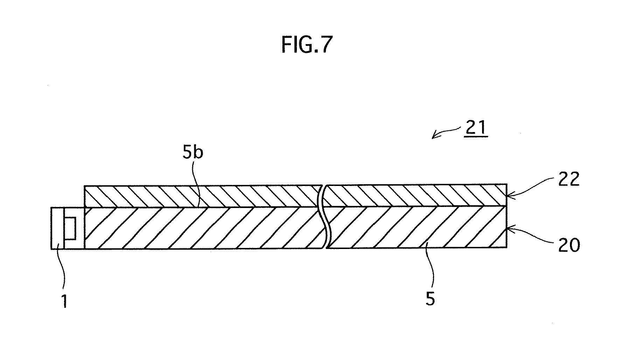

As materials of the upper reflecting sheet 7a and the lower reflecting sheet 7b, an ESR film (made by Sumitomo 3M Ltd.) can be used for example, and other materials may be also used as long as light can be reflected. Alternatively, a metallic foil having metallic luster, Ag sheet, and the like may be used.
Next, the following describes a structure of a liquid crystal display device including the planar light emitting device 20, with reference to FIG. 7. FIG. 7 is a sectional view of an outline structure of a liquid crystal display device including the linear light source device according to the embodiment.

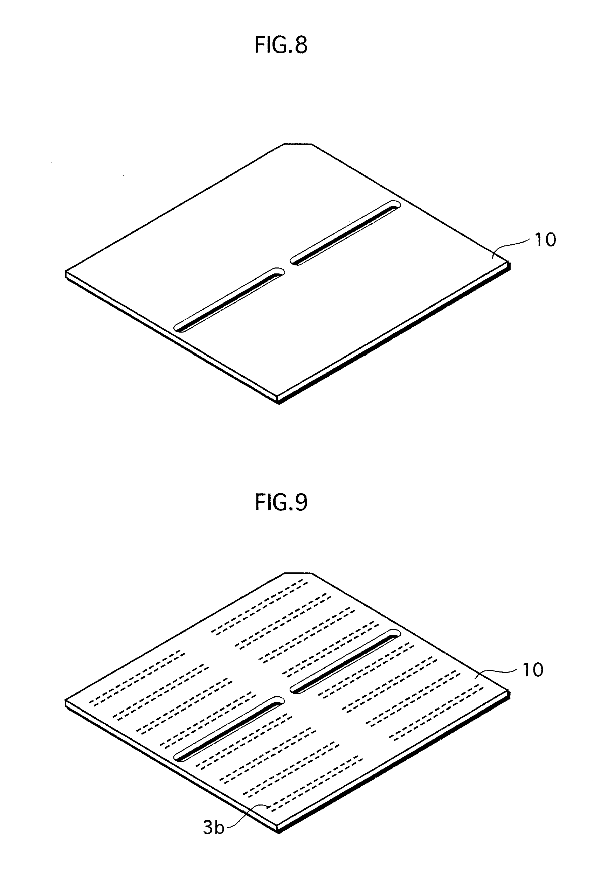

A liquid crystal display device 21 includes the planar light emitting device 20 and a liquid crystal display unit 22. The liquid crystal display unit 22 is arranged on a side of the main light outputting surface 5b of the light guide plate 5 included in the planar light emitting device 20.
Next, the following describes a manufacturing method of the linear light source device 1 having the structure described above according to the embodiment of the present invention, with reference to FIG. 8 to FIG. 12. FIG. 8 to FIG. 12 respectively describe a manufacturing method of the linear light source device according to the embodiment of the present invention. Firstly, a manufacturing method of the linear light source assembly 3 is described.

As shown in FIG. 8, a substrate material 10 is firstly prepared, which is to be formed as the elongated sub substrate 3a of the linear light source assembly 3. The substrate material 10 is a rectangular BT resin substrate having a height of approximately 7.0 cm and a width of approximately 5.0 cm. A wiring pattern having mounted thereon the light emitting elements 3b is formed on the substrate material 10, though not shown in the drawing.
After preparing the substrate material 10, a mounting process is performed as shown in FIG. 9, in which the light emitting elements 3b are linearly arranged two by two at predetermined positions of the wiring pattern formed on the substrate material 10.

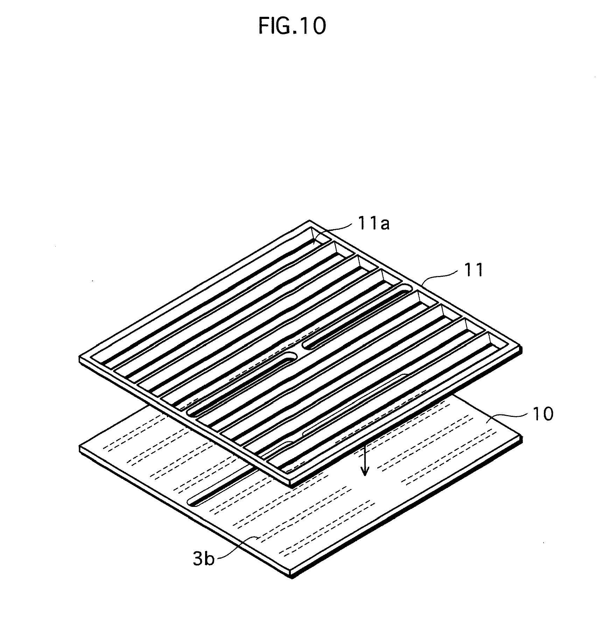

Next, as shown in FIG. 10, a frame 11 having rectangular openings 11a is arranged such that the rectangular openings 11a correspond to the light emitting elements 3b that are linearly arranged, and then the frame 11 is attached to the substrate material 10 using an adhesive. The frame 11 to be formed as the reflecting member 3c has the openings 11a whose edges are inclined so as to become gradually narrow toward an attaching surface between the frame 11 and the substrate material 10. This inclined surface is formed to be the inclined surface 3c-1.

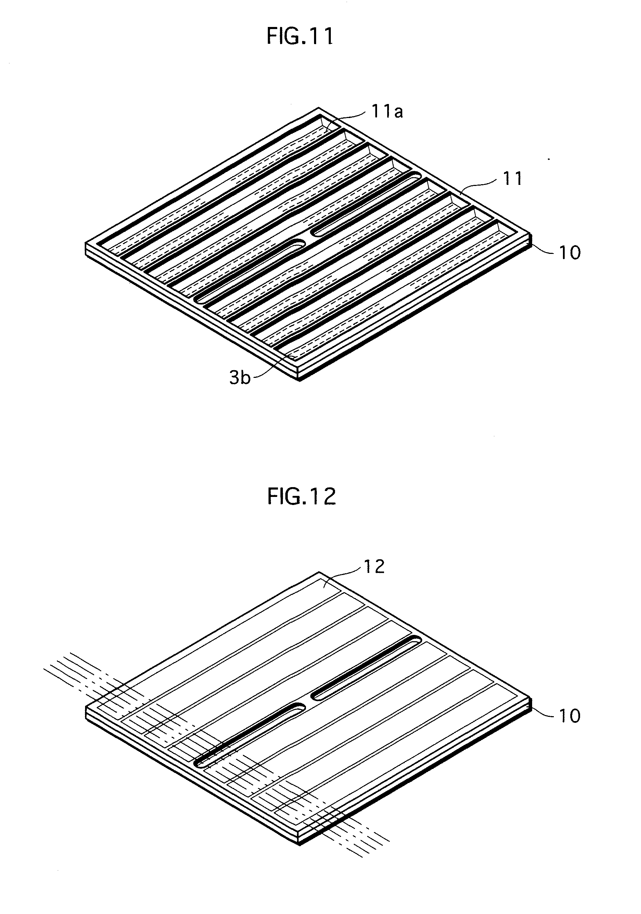

FIG. 11 shows the frame 11 attached to the substrate material 10.

As shown in FIG. 12, the resin sealing layer 12 is formed by attaching the frame 11 to the substrate material 10 and filling the openings 11a with epoxy resin, so as to cover the light emitting elements 3b that are linearly arranged.
Then, a cut process is performed in which the substrate material 10 having formed thereon the resin sealing layer 12 is cut into pieces using a blade at positions for example shown by chain lines in FIG. 12, such that the light emitting elements 3b are arranged in the horizontal line. Through this cut process, the linear light source assembly 3 as shown in FIG. 2 is completed.

The linear light source assembly 3 formed as described above is mounted on the main substrate 2 such that the power terminals 3e and the heat conductive terminal 3f of the linear light source assembly 3 correspond to the power pattern having printed thereon the soldering paste and the connection terminal 2b of the main substrate 2. Furthermore, the circuit 4 is mounted on the main substrate 2.
The linear light source assembly 3 is made of the elongated sub substrate 3a, and therefore the linearity thereof is easily maintained. Moreover, on the linear light source device 1 shown in FIG. 1, only 11 linear light source assemblies 3 are mounted. This can reduce the number of the linear light source assemblies 3 to be mounted, compared with a case where chip LEDs are mounted one by one on the linear light source device 1. Therefore, the necessary degree of the mounting accuracy is reduced.

After the linear light source assemblies 3 and the circuit 4 are mounted on the main substrate 2, reflow processing is performed to fix the linear light source assemblies 3 and the circuit 4. The linear light source assemblies 3 are connected with the main substrate 2 not only via the power terminals 3e and the power pattern but also via the heat conductive terminal 3f and the connection terminal 2b. This can easily prevent the reflow processing from causing the misalignment between the linear light source assemblies 3 and the circuit 4. The linear light source device 1 can be formed in this way.

Also, when the reflow processing is performed, a distortion stress is generated due to the difference in expansion coefficient between the resin sealing member 3d that seals the light emitting elements 3b of the linear light source assembly 3 and the sub substrate 3a. However, since the linear light source device 1 has the structure in which a plurality of the linear light source assemblies 3 are mounted on the main substrate 2, each of the linear light source assemblies 3 can be shortened. Accordingly, even if the light emitting elements 3b are sealed with resin, the distortion stress generated in mounting the linear light source assemblies 3 on the main substrate 2 can be suppressed, and such distortion is hardly caused.

If a linear light source device is composed of a single linear light source assembly having an entire length that is the same as a length of a lateral surface of a wide light guide plate and the reflow processing is performed on the linear light source device, a sub substrate might be distorted. In such a case, distances between each light emitting element and the light guide plate cannot be uniformed, and therefore the luminance unevenness is caused.
It is possible to mount the linear light source device 1 according to the embodiment on the main substrate 2 without distortion of the sub substrate 3a by mounting the plurality of the linear light source assemblies 3 on the main substrate 2. Accordingly, distances between each of the light emitting elements 3b mounted on the sub substrate 3a and the light guide plate can be uniformed, and therefore the luminance unevenness is not caused. Furthermore, when the linear light source assemblies 3 are mounted on the main substrate 2, the sub substrate 3a is not distorted, and therefore the linear light source assemblies 3 can be mounted on the main substrate 2 with few gaps generated therebetween. Accordingly, heat conducted to the sub substrate 3a from the light emitting elements 3b is easily conducted to the main substrate 2. This can improve the heat dissipation effect.

Next, the following describes a method of arranging the linear light source device 1 on the light guide plate 5 in order to cause the linear light source device 1 to function as the planar light emitting device 20 according to the embodiment. Firstly, the light guide plate 5 is prepared, which has the reflecting surface 5c as a bottom surface thereof on which the reflecting plate 6 is provided.
As shown in FIG. 6, the linear light source device 1 and the lateral surface 5a of the light guide plate 5 are arranged with a predetermined gap therebetween such that the center in the width direction of the sub substrate 3a of the linear light source device 1 coincides with the center in the width direction of the lateral surface 5a of the light guide plate 5. Then, the upper reflecting sheet 7a and the lower reflecting sheet 7b are attached to lateral surfaces of the sub substrate 3a and edges of the light guide plate 5 to hold the sub substrate 3a and the light incident surface of the light guide plate 5, so as to cover the mounting surface 3a-1 of the linear light source assembly 3.

Next, the following describes the linear light source device 1 according to the embodiment and use of the planar light emitting device 20 using the linear light source device 1, with reference to FIG. 1 to FIG. 4.
As shown in FIG. 1 and FIG. 2, when the main substrate 2 is energized, a current is supplied to the light emitting elements 3b via the power pattern and the power terminals 3e of the sub substrate 3a to cause the light emitting elements 3b to emit light.
The light output from the light emitting elements 3b in the main light take-out direction F directly enters into the lateral surface 5a of the light guide plate 5. Also, light output from the light emitting elements 3b toward the reflecting member 3c is reflected by the reflecting member 3c and directly enters into the lateral surface 5a of the light guide plate 5, or the light is reflected by the upper reflecting sheet 7a and the lower reflecting sheet 7b and then enters into the lateral surface 5a of the light guide plate 5. Furthermore, light output from the light emitting elements 3b in the horizontal direction of the sub substrate 3a passes through the resin sealing member 3d. Then, the light is reflected by the upper reflecting sheet 7a and the lower reflecting sheet 7b, and enters into the lateral surface 5a of the light guide plate 5.

As shown in FIG. 6, in the planar light emitting device 20, the linear light source device 1 is arranged on the light guide plate 5 whose lateral surface 5a having a width larger than a width of the sub substrate 3a, such that the center in the width direction of the sub substrate 3a coincides with the center in the width direction of the lateral surface 5a. The upper reflecting sheet 7a and the lower reflecting sheet 7b are arranged so as to hold the sub substrate 3a and the edges of the light guide plate 5. The upper reflecting sheet 7a and the lower reflecting sheet 7b are inclined so as to gradually widen a gap generated therebetween toward the lateral surface 5a to form a reflecting surface. Therefore, light output from the light emitting elements 3b passes through the resin sealing member 3d in the horizontal direction of the sub substrate 3a, and is reflected by the upper reflecting sheet 7a and the lower reflecting sheet 7b. All the reflected light travels in the direction of the lateral surface 5a of the light guide plate 5. Accordingly, the light can be caused to efficiently enter into the lateral surface 5a of the light guide plate 5.

When the light emitting elements 3b are caused to emit light, the light emitting elements 3b generate heat. As shown in FIG. 4, the heat generated by the light emitting elements 3b is conducted to the sub substrates 3a of the linear light source device 1 and is dissipated to the surroundings. Also, the heat is conducted to the main substrate 2 via the power terminals 3e and the heat conductive terminal (alignment terminal) 3f. Especially, the heat conductive terminal 3f is provided on the connection surface 3a-2 of the sub substrate 3a so as to correspond to a position where the light emitting elements 3b are mounted. Accordingly, the heat conductive terminal 3f conducts heat more easily than the power terminals 3e provided on the edges of the sub substrate 3a. Also, since gaps provided between each of the sub substrates 3a and the main substrate 2 are slight, there is a route for dissipating heat to the main substrate 2 via the sub substrate 3a.

The heat conducted to the main substrate 2 is conducted to the aluminum plate base via the glass epoxy substrate of the main substrate 2, and then the heat is dissipated. This prevents the temperature of the entire linear light source device 1 from becoming high.
For example, assume that a planar light emitting device includes the main substrate 2 having individually mounted thereon chip LEDs. Heat generated from the chip LEDs is dissipated to the main substrate 2 through areas where the chip LEDs face the main substrate 2. However, in the linear light source device 1 of the embodiment, the linear light source assemblies 3 each having mounted thereon the light emitting elements 2b are arranged on the main substrate 2. Accordingly, a surface that dissipates heat to the main substrate 2 is the connection surface that is a bottom surface of the sub substrate 3 of each of the linear light source assemblies 3. Therefore, an area of the main substrate 2 that faces one light emitting element 3b to can be widened, compared with a case where chip LEDs are individually mounted on the main substrate 2. That is, by arranging the linear light source assemblies 3 each having mounted thereon the light emitting elements 3b on the main substrate 2, the high heat dissipation effect can be achieved.

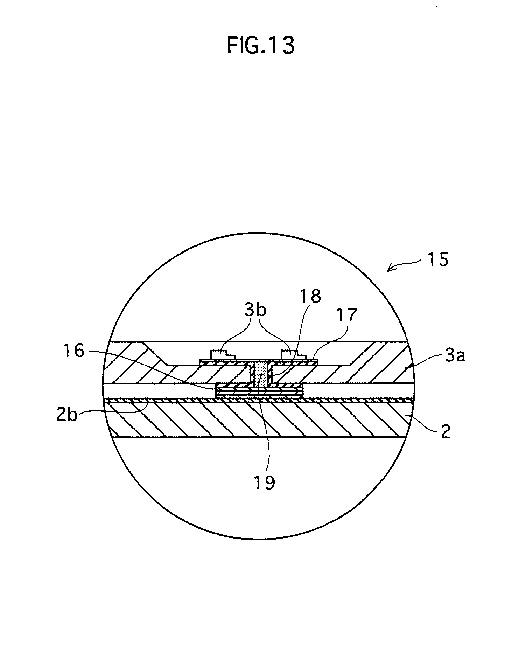

Furthermore, the upper reflecting sheet 7a and the lower reflecting sheet 7b are attached to the planar light emitting device 20. Accordingly, by forming the upper reflecting sheet 7a and the lower reflecting sheet 7b using metallic foil, the upper reflecting sheet 7a and the lower reflecting sheet 7b using metallic foil function as heat dissipation plates. Therefore, the upper reflecting sheet 7a and the lower reflecting sheet 7b can improve the heat dissipation effect while improving the luminance efficiency of the planar light emitting device 20.
Next, the following describes a linear light source device 15 according to a modification of the embodiment, with reference to FIG. 13. FIG. 13 shows a linear light source device according to the modification of the embodiment of the present invention. Note that compositional elements in FIG. 13 having the same functions as those in FIG. 4 have the same signs as those in FIG. 4, and therefore the description thereof is omitted here.

As shown in FIG. 13, in the linear light source device 15 according to the modification, a main substrate 2 is connected with a sub substrate 3a of each of linear light source assemblies 3 via a heat conductive terminal (alignment terminal) 16 provided on a connection surface of the sub substrate 3a and a connection terminal 2b provided on the main substrate 2.
The heat conductive terminal 16 is provided on an opposite side of the connection surface where the light emitting elements 3b are mounted, and is connected with a wiring pattern 17 that is conductively connected with an anode having die-bonded thereto the light emitting elements 3b via a through hole 18. This through hole 18 is filled with a resin 19.

Since the sub substrate 3a is connected with the main substrate 2 as described above, heat generated by the light emitting elements 3b can be conducted from the conductively mounted wiring pattern 17 to the heat conductive terminal (alignment terminal) 16 via the through hole 18, and then the heat is conducted to the main substrate 2. Furthermore, the through hole 18 is solid because of being filled with the resin 19. Accordingly, since heat can be conducted not only via the through hole 18 but also via the resin 19, the heat dissipation effect can be improved. Furthermore, it is possible to further improve the heat dissipation effect by using, as the resin 19, a metal paste having metal included in resin to improve heat conductivity.

### INDUSTRIAL APPLICABILITY

Even if the present invention is used with a light guide plate having a wide screen size, the present invention can prevent the luminance unevenness by causing light to uniformly enter into the light guide plate. Furthermore, the present invention is easily applicable to light guide plates having various screen sizes, and can achieve the high luminance and the long operating life due to sufficient heat dissipation. Therefore, the present invention is suitable, as planar light emitting devices for liquid crystal display devices, for linear light source devices arranged on one of lateral surfaces of light guide plates.

## Claims

1. A linear light source device arranged on a lateral surface that is a light incident surface of a light guide plate, the linear light source device comprising:
a plurality of linear light source assemblies each including an elongated sub substrate and a plurality of light emitting elements linearly mounted on one of main surfaces of the sub substrate; and
a main substrate having mounted thereon the linear light source assemblies.

2. The linear light source device of Claim 1, wherein
the linear light source assemblies are substantially linearly arranged such that longitudinal directions of the sub substrates are the same.

3. The linear light source device of Claim 1, wherein
each of the sub substrates is connected with the main substrate via a power terminal and a heat conductive terminal.

4. The linear light source device of Claim 3, wherein
the heat conductive terminal is provided on another one of the main surfaces of the sub substrate so as to correspond to a position where the light emitting elements are mounted.

5. The linear light source device of Claim 3, wherein
the heat conductive terminal is connected with a wiring pattern having conductively mounted thereon the light emitting elements via a through hole formed in the sub substrate.

6. The linear light source device of Claim 4, wherein
the heat conductive terminal is connected with a wiring pattern having conductively mounted thereon the light emitting elements via a through hole formed in the sub substrate.

7. The linear light source device of Claim 5, wherein the through hole is filled with resin.

8. The linear light source device of Claim 6, wherein the through hole is filled with resin.

9. The linear light source device of Claim 1, wherein the sub substrate is a ceramic substrate, and
the main substrate includes an aluminum plate having attached thereto an insulating substrate having formed thereon a wiring pattern.

10. The linear light source device of Claim 5, wherein the sub substrate is a ceramic substrate, and
the main substrate includes an aluminum plate having attached thereto an insulating substrate having formed thereon a wiring pattern.

11. The linear light source device of Claim 8, wherein the sub substrate is a ceramic substrate, and
the main substrate includes an aluminum plate having attached thereto an insulating substrate having formed thereon a wiring pattern.

12. The linear light source device of Claim 1, wherein
each of the linear light source assemblies includes a reflecting member that reflects light output from the light emitting elements in a light take-out direction.

13. The linear light source device of Claim 2, wherein
each of the linear light source assemblies includes a reflecting member that reflects light output from the light emitting elements in a light take-out direction.

14. The linear light source device of Claim 11, wherein
each of the linear light source assemblies includes a reflecting member that reflects light output from the light emitting elements in a light take-out direction.

15. The linear light source device of Claim 1, wherein
an integral multiple of a length of each of the sub substrates in a longitudinal direction is substantially equal to a length of the lateral surface of the light guide plate.

16. The linear light source device of Claim 2, wherein
an integral multiple of a length of each of the sub substrates in a longitudinal direction is substantially equal to a length of the lateral surface of the light guide plate.

17. The linear light source device of Claim 14, wherein
an integral multiple of a length of each of the sub substrates in a longitudinal direction is substantially equal to a length the lateral surface of the light guide plate.

18. A planar light emitting device comprising the linear light source device of Claim 1 and a light guide plate.

19. A planar light emitting device comprising the linear light source device of Claim 17 and a light guide plate.

20. A liquid crystal display device comprising the planar light emitting device of Claim 18 and a liquid crystal display unit.
